Europäisches Patentamt

European Patent Office

Office européen des brevets

(11) Veröffentlichungsnummer: **0 149 211**
**B1**

# EUROPÄISCHE PATENTSCHRIFT

(45) Veröffentlichungstag der Patentschrift:
04.11.87

(21) Anmeldenummer: 84116081.5

(22) Anmeldetag: 21.12.84

(51) Int. Cl.⁴: **B 22 C 7/02,** B 29 C 67/22 //
B29K25/00

(54) Verfahren zur Herstellung von aus expandierten Schaumstoffperlen bestehenden, verlorenen Giessmodellen für das Vollformgiessverfahren, vorzugsweise zur Fertigung von Seriengussteilen, sowie Vorrichtung hierzu.

(30) Priorität: 30.12.83 DE 3347615

(43) Veröffentlichungstag der Anmeldung:
24.07.85 Patentblatt 85/30

(45) Bekanntmachung des Hinweises auf die Patenterteilung:
04.11.87 Patentblatt 87/45

(84) Benannte Vertragsstaaten:
AT CH DE FR GB IT LI

(56) Entgegenhaltungen:
EP-A-0 072 499
DE-B-1 234 938
US-A-4 272 469

(73) Patentinhaber: Grünzweig + Hartmann und
Glasfaser AG, Bürgermeister- Grünzweig- Strasse
1-47, D-6700 Ludwigshafen am Rhein (DE)

(72) Erfinder: Bissinger, Fridolin, Wittelbachstrasse 11,
D-6700 Ludwigshafen (DE)
Erfinder: Krzyzanowski, Erich, Ormsheimer Hof 7b,
D-6710 Frankenthal (DE)

(74) Vertreter: Kuhnen, Wacker & Partner,
Schneggstrasse 3-5 Postfach 1729, D-8050 Freising
(DE)

## Beschreibung

Die Erfindung betrifft ein Verfahren zur Herstellung von aus expandierten Schaumstoffperlen bestehenden, verlorenen Gießmodellen für das Vollformgießen, vorzugsweise zur Fertigung von Seriengußteilen, nach dem Oberbegriff des Anspruchs 1, wie eine zur Durchführung des Verfahrens besonders geeignete Vorrichtung.

Es sind bereits verschiedene Verfahren zur Herstellung von Gußstücken unter Verwendung bei höherer Temperatur vergasbarer Modelle bekannt. Diese Verfahren sind unter dem Begriff Vollformgießen zusammengefaßt und weisen das gemeinsame Merkmal auf, daß das Modell durch die einfließende Schmelze "aufgefressen" wird, wobei die Gießgeschwindigkeit zweckmäßig so eingerichtet wird, daß Hohlräume zwischen der einfließenden Schmelze und dem schwindenden Modell möglichst vermieden werden. Dem Kunststoff für das verlorene Modell, zumeist Polystyrol, wird in der Regel ein strahlungsabsorbierender Farbstoff zugesetzt, um die Vergasung des Modells vor der einfließenden Schmelze zu fördern. Für exakte Abgüsse ist es im allgemeinen erforderlich, den Formsand sorgfältig zu verfestigen oder mit Bindemitteln zu versehen.

Obgleich nun das Vollformgießverfahren sich inzwischen seinen festen Platz unter den Gießverfahren erobert hat und bei der Herstellung großer Einzelgußstücke das zur Zeit wirtschaftlichste Verfahren ist, konnte es sich beim Serien- und Massenguß noch nicht vollständig durchsetzen. Dies insbesondere deshalb, weil aus den nachstehend erläuterten Gründen dünnwandige Gußstücke nicht oder nicht mit der erforderlichen Maßhaltigkeit der Wandstärke hergestellt werden können.

Wie sich im Prinzip z. B. aus einem VDG'-Merkblatt M4 von Januar 1983 (herausgegeben vom Verein Deutscher Gießereifachleute) ergibt, wird der leicht vergasbare Kunststoff für verlorene Modelle in Form kleiner massiver, mit einem Treibmittel versetzter Perlen bezogen. Das Einbringen des Treibmittels erfolgt in der üblichen Weise durch die chemische Industrie. Dieses Vorprodukt mit einem Raumgewicht in der Größenordnung von 600 kg/m$^3$ wird sodann unter der Einwirkung von Würme zu einem aus expandierten Perlen oder Körnern bestehenden Granulat vorgeschäumt, das lediglich noch ein Raumgewicht von 20 kg/m$^3$ oder weniger besitzt. Das so vorgeschäumte Granulat wird dann in ebenfalls üblicher Weise mit Trägerluft in eine Schäumform eingebracht, bis es diese mit gutem Füllungsgrad ausfüllt, wonach zumeist durch Einleiten von Dampf eine Nachschäumung in der Schäumform erfolgt, bei der die einzelnen expandierten Schaumstoffperlen durch nochmalige, wenn auch geringe Volumenvergrößerung aneinander und an die Wände des Formhohlraumes gepreßt werden, um die erforderliche gegenseitige Verbindung zu schaffen und so den Schaumstoffkörper mit der Kontur der Schäumform zu erzeugen. In der Schäumform können entweder Schaumblöcke erzeugt werden, die nach verschiedenen Arbeitsschritten wie Schnitten und/oder materialabnehmenden Bearbeitungen gegebenenfalls unter Verklebung von so erzeugten Einzelelementen zur Bildung des Modells verarbeitet werden, oder aber es wird insbesondere bei kleineren Gußstücken von vornherein die Kontur der Schäumform der Kontur des ganzen Gußstückes oder eines Teilbereichs desselben angepaßt, so daß unmittelbar in der Schäumform ein fertiges Modell oder ein fertiger Modellteil erzeugt wird. Für kleinere und kompliziert geformte Gußstücke ist die letztgenannte Arbeitsweise zur kostengünstigen Herstellung einer Vielzahl kompliziert geformter verlorener Modelle für den Serienguß von besonderer Bedeutung.

Die expandierten Perlen des in die Schäumform einzuführenden vorgeschäumten Granulats besitzen im Hinblick auf den Vorschäumgrad und die für die vorliegenden Zwecke üblicherweise verwendete Perlengröße des Vorprodukts einen durchschnittlichen Durchmesser von etwa 2 mm. Bei einer am Gießmodell zu bildenden Wandstärke und dementsprechend einem Hohlraum in der Schäumform mit einer Breite von beispielsweise 5 mm können somit lediglich zwei expandierte Perlen nebeneinander in den engen Querschnitt des Hohlraums eintreten, ohne daß sich die expandierten Perlen gegenseitig an die Wandung der Form andrücken. Fällt eine dritte Perle in die Lücke zwischen zwei derartig nebeneinanderliegenden Perlen, so sucht sie die beiden äußeren Perlen auseinanderzudrücken und verspreizt diese somit gegen die Wand der Schäumform. Die Reibung zwischen den expandierten Perlen und der Wand der Schäumform ist relativ hoch, so daß ein solches Andrücken von expandierten Perlen gegen diese Wand die Bewegung der Perlen stark behindern oder ganz unterbinden kann. Damit ist selbst bei Unterstützung des Füllvorganges durch Trägerluft, Unterdruck oder dergleichen nicht sicherzustellen, daß auch der dünne Querschnitt homogen satt mit expandierten Perlen gefüllt wird. Insbesondere unter ungünstigen Umständen, etwa bei Zusammentreffen vergleichsweise groß ausgefallener expandierter perlen, entstehen somit leicht Fehlstellen, die nicht bis zur maximalen Schüttdichte mit expandierten Perlen angefüllt sind.

Insbesondere bei Modellen mit derartig dünnen Wandungen muß zur Ermöglichung einer störungsfreien und beschädigungsfreien Manipulation eine Beschichtung mit einem erstarrenden Überzug erfolgen; ein solcher Überzug aus feuerfestem, beispielsweise keramischem Material, häufig mißverständlich als Schlichte bezeichnet, ist auch erforderlich, wenn in der Gießform ein Formstoff verwendet wird, der gegenüber der Schmelze nicht ausreichend temperaturbeständig ist und daher vor deren unmittelbarer Berührung geschützt werden muß, beispielsweise Quarzsand oder Stahlgranulat bei der Herstellung von Stahlguß. Das Überzugsmaterial dringt beim Auftragen auf die Oberfläche des Modells in oberflächenseitige Hohlräume sowie auch in nach außen hin offene Zwickel zwischen benachbarten, aneinandergepreßten Perlen ein und bildet somit auf seiten des Gußteils, das an der Stelle des Schaummodells erzeugt wird, eine unregelmäßige Oberfläche. Kommen nun am Modell oberflächenseitige Fehlstellen durch nicht vollständige Ausfüllung mit expandierten Perlen hinzu, so kann das Überzugsmaterial relativ weit hinter die theoretische Oberflächenlinie des Schaumstoffmodells eindringen. Beim Abguß vergast das Schaumstoffmaterial des Modells, während die entsprechende, an der vorherigen Modelloberfläche ausgeformte Kontur des Überzugsmaterials stehen bleibt. Jegliches Eindringen des Überzugsmaterials in die Oberfläche des Schaumstoffmodells bleibt somit am Gußstück als Querschnittsverminderung erhalten. Dabei kann sich am Schaumstoffmodell leicht eine solche Querschnittsschwächung im Bereich einer dünnen Wand des Gußstücks ergeben, daß diese den erforderlichen Festigkeits- oder sonstigen Maßanforderungen nicht mehr genügt und Ausschuß entsteht bzw. bei nicht rechtzeitig erkannter Querschnittsschwächung spätere Schäden durch Brüche zu erwarten sind. Die Erkennung derartiger, für den Abguß ungeeigneter Modelle erfordert eine genaue Untersuchung der Modelloberfläche und ist nach dem Aufbringen des Überzugsmaterials nicht mehr möglich, da dann von außen lediglich die mit der Schmelze nicht in Berührung gelangende Oberfläche des Überzugsmaterials sichtbar ist.

Daher ist es für am Gußstück zu erzeugende Oberflächen hoher Qualität und Maßhaltigkeit erforderlich, daß das Überzugsmaterial für das Schaumstoffmodell eine glatte, von Poren oder gar von Fehlstellen möglichst vollständig freie Oberfläche des Schaumstoffes mit Gewißheit vorfindet. Derartige glatte Oberflächen sind insbesondere im Bereich besonders geringer Wandstärken von ausschlaggebender Bedeutung, um am Gußstück die dünne Wand mit homogener Stärke und ohne Schwachstellen zu erhalten. Gerade aber bei geringen Wandstärken unterhalb von etwa 7 mm treten makroskopische Poren durch nicht vollständige Füllung des Querschnitts mit expandierten Perlen auf, wie dies weiter oben erläutert ist, die zu entsprechenden Poren am Gußstück führen, während bei noch geringeren Wandstärken von einigen wenigen Millimetern trotz unterstützender Maßnahmen überhaupt keine brauchbare Füllung mehr erzielbar ist, so daß eine Serienfertigung selbst bei geringen Qualitätsanforderungen unmöglich wird.

Etwa aus der Verpackungsindustrie ist es aus einem Aufsatz "Expandiertes Polystyrol EPS", erschienen im VDI-Verlag GmbH Düsseldorf, 1979 für die Herstellung von Eierverpackungen, Trinkbechern usw. bereits seit langem bekannt, geringe Wandstärken bis hinunter in die Größenordnung von 1 mm herzustellen. Die Herstellung besonders dünner Wandstärken gelingt aber einfach durch Verminderung des Vorschäumgrades. Für eine Wandstärke von 2,5 mm werden expandierte Perlen mit einem Schüttgewicht von rund 50 g/l verwendet, während für eine Wandstärke von 1,5 mm bereits expandierte Perlen mit einem Schüttgewicht von über 100 g/l verwendet werden, wobei dann 90 % der Perlen einen Durchmesser von nur zwischen etwa 0,3 und 0,5 mm besitzen und so immer noch wenigstens drei Perlen nebeneinander den Wandquerschnitt anfüllen können, ohne daß die Perlen beim Eintrag in die Form an der Wand verkeilen.

Dieser Weg, bei verminderter Wandstärke des Modells einfach den Vorschäumgrad zu verringern und so entsprechend kleinere expandierte Perlen zu erzeugen, ist zur Herstellung verlorener Modelle für das Vollformgießen nicht gangbar. Wesentliche Voraussetzung für das Vollformgießen ist nämlich, daß der Schaumstoff durch die einströmende Schmelze praktisch rückstandsfrei schnell vergast, was zwingend ein geringes Raumgewicht des Schaumstoffes unter 20 kg/m³, besser unter 18 kg/m³ voraussetzt. Dies entspricht einem Schüttgewicht der expandierten Perlen von ebenfalls rund 15 bis 20 g/l, da die Schäumform für die vorliegenden Zwecke vollständig mit expandierten Perlen gefüllt werden muß und die Restexpansion in der Schäumform zu keiner weiteren merklichen Verminderung des Raumgewichtes führen kann. Die Einstellung eines geringen Vorschäumgrades zur Erzielung expandierter Perlen sehr geringen Durchmessers scheidet daher für das vorliegende Fachgebiet aus.

Somit verbliebe als Ausweg, auf eine besonders feinperlige Siebfraktion des Vorproduktes zurückzugreifen, dieses mit dem gewünschten hohen Vorschäumgrad zur Erzielung des niedrigen Schüttgewichtes vorzuschäumen und so zu verwenden, da bei gleichem Vorschäumgrad die erzeugten expandierten Perlen natürlich um so geringeren Durchmesser besitzen, je feinperliger das Vorprodukt ist. Leider sind jedoch auch hier Grenzen gesetzt, da in das Vorprodukt aus verschiedenen Gründen nur ein maximaler Treibmittelgehalt in der Größenordnung von 6 Gew. % eingebracht werden kann, wobei als Treibmittel Propan und/oder Isopropan, Butan oder dergleichen verwendet wird. Ein Teil des Treibmittels entweicht jedoch aus dem Vorprodukt durch Alterung, mechanische Einwirkung und dergleichen. Da eine besonders feinperlige Siebfraktion eine relativ viel größere Oberfläche besitzt als eine grobperlige Fraktion, ist gerade bei einer solchen feinperligen Fraktion die mechanische Einwirkung beim Sieb-Vorgang am stärksten und steht die größte Oberfläche für ein Entweichen des Treibmittels bei der Lagerung zur Verfügung, so daß feinperlige Fraktionen gegenüber grobperligeren Vorprodukten regelmäßig weniger Expandierfähigkeit behalten. Da aber andererseits für den Schäumvorgang und das spätere Nachschäumen in der Form ein gewisser Treibmittelgehalt zwangsläufig nicht unterschritten werden kann, ergibt sich hierdurch eine Grenze für die Feinperligkeit des Vorproduktes, die, da für die vorliegenden Zwecke ohnehin so feinperlig wie möglich gearbeitet wird, nicht gestattet, eine Perlengröße des expandierten Materials von etwa 2 mm wesentlich zu unterschreiten. Hierdurch wiederum ergibt sich die eingangs genannte minimale Wandstärke des Gußstückes von etwa 5 bis 7 mm, wenn in der Serienfertigung eine einwandfreie Füllung sichergestellt werden soll. Bei Verwendung von noch feinperligerem Vorprodukt wird für das Vorschäumen auf das gewünschte geringe Schüttgewicht ein so hoher Treibmittelanteil verbraucht, daß für das nachfolgende Nachschäumen in der Form zum Verbacken oder "Verschweißen" der Perlen unter Ausbildung einer guten Oberfläche nicht mehr ausreichender Treibmitteldruck zur Verfügung steht.

Aufgabe der Erfindung ist es, ein Verfahren zur Herstellung von aus expandierten Schaumstoffperlen bestehenden, verlorenen Gießmodellen für das Vollformgießen, vorzugsweise zur Fertigung von Seriengußteilen, nach dem Oberbegriff des Anspruchs 1 zu schaffen, welches eine gute Füllung auch kleiner Formquerschnitte der Schäumform im Serienguß sowie beim Nachschäumen in der Schäumform ein gutes Verbacken der expandierten Perlen sowie die Ausbildung einer guten Oberfläche des Schaumstoffmodells ermöglicht.

Die Lösung dieser Aufgabe erfolgt durch die kennzeichnenden Merkmale des Anspruchs 1.

Dadurch, daß für die Vorschäumung das gesamte nutzbare Treibmittel des Vorproduktes genutzt werden kann, kann ein sehr feinperliges Vorprodukt gewählt werden, dessen gegenüber einem grobperligeren Vorprodukt geringere Expandierfähigkeit in vollem Umfange für die Vorschäumung genützt werden kann. Hierdurch wird im Zuge der Vorschäumung auch bei sehr feinperligem Vorprodukt das gewünschte Schüttgewicht in der Größenordnung von 15 bis 20 g/l erreicht, wobei die expandierten Perlen jedoch im Hinblick auf die Feinperligkeit des Ausgangsproduktes geringen Durchmesser aufweisen und daher auch kleine Querschnitte der Schäumform gut zu füllen vermögen.

Allerdings führt der Verbrauch praktisch des gesamten nutzbaren Treibmittels für die Vorschäumung dazu, daß die expandierten Perlen für die Nachschäumung in der Schäumform keine ausreichende Expandierfähigkeit mehr besitzen. Diese Expandierfähigkeit für die Nachschäumung wird jedoch erfindungsgemäß dadurch erneut geschaffen, daß sogleich nach dem Abschluß der Vorschäumung die das vorgeschäumte Material umgebende Atmosphäre abgesaugt und ein zusätzliches Treibmittel zur Bildung einer Treibmittelatmosphäre zugeführt wird. Es hat sich gezeigt, daß es auf diese Weise möglich ist, erneut ein Treibmittel in die frisch expandierten Perlen einzuführen und so eine ausreichende Expandierfähigkeit für den Nachschäumvorgang zu erzielen.

Bevorzugt wird das Treibmittel bei der Bildung der Treibmittelatmosphäre unter leichten Überdruck gesetzt, um das Eindiffundieren in die expandierten Perlen zu unterstutzen. Zur Stabilisation sollten die expandierten Perlen in der so erzeugten Treibmittelatmosphäre über einen Zeitraum von einigen Minuten, insbesondere zwischen einer Minute und fünf Minuten, verweilen, wobei in dieser Zeit der leichte Überdruck der Treibmittelatmosphäre auf Umgebungsdruck abfallen kann. Die erforderliche Verweilzeit sowie ein etwa erforderlicher leichter Überdruck der Treibmittelatmosphäre richten sich nach den Eigenschaften des verwendeten Vorprodukts sowie der gewünschten einzubringenden Treibmittelmenge.

In der Regel erfolgt die Vorschäumung durch Einführung von Dampf in den Vorschäumraum. Hierdurch wird eine Trocknung der expandierten Perlen erforderlich, die üblicherweise durch nachfolgenden Luftzutritt zu dem erwärmten vorgeschäumten Material herbeigeführt wird. Dabei verbleiben jedoch Kondensatrückstände des Dampfes auf Oberflächen der expandierten Perlen. Es hat sich gezeigt, daß die Einbringung von Treibmittel in einer Treibmittelatmosphäre in expandierte Perlen nicht gelingt, so lange die Oberflächen der expandierten Perlen noch mit einem Kondensatschleier behaftet sind. Daher ist gemäß Anspruch 4 für den Fall, daß die Vorschäumenergie durch Dampf eingebracht worden ist, vorgesehen, bei der Absaugung der Dampf-Luft-Atmosphäre im Anschluß an die Vorschäumung einen erheblichen Unterdruck zwischen etwa 300 mbar und 800 mbar zu erzeugen, der gemäß Anspruch 5 nur sehr kurz zwischen etwa 0,5 s und 2 s wirksam ist. Durch einen solchen Vakuumstoß geht schlagartig samtliches Kondensat an den Oberflächen der expandierten Perlen in die gasförmige Phase über und kann entweichen, so daß eine wirksame Trocknung erfolgt, die zu einer praktisch vollständigen Beseitigung des Kondensatschleiers auf der Oberfläche der expandierten Perlen führt. Die Höhe des Unterdrucks und die Zeitdauer des Unterdrucks müssen dabei in Abhängigkeit von dem verwendeten Vorprodukt gewählt werden, derart, daß der Unterdruck keinen schädlichen Druckabfall im Inneren der Perlen oder eine schädigende Kühlung der Perlen durch Wärmeabgabe an die umgebende Atmosphäre geringen Drucks ergibt, dabei aber dennoch eine möglichst vollständige Beseitigung aller Kondensatrückstände auch in Vertiefungen der mikroskopisch rauhen Oberflächen der Perlen bewirkt. Der auf diese Weise kurzzeitig aufgebaute Unterdruck wird sodann durch die zusätzliche Treibmittelzufuhr abgebaut, wobei das zugeführte Treibmittel gegebenenfalls in der weiter oben geschilderten Weise unter leichten Überdruck gesetzt werden kann, und in jedem Falle kondensatfreie Oberflächen der expandierten Perlen vorfindet und so gut in die Perlen hineindiffundieren kann. Dadurch, daß die expandierten Perlen besonders geringe Größe haben, weisen sie eine relativ hohe spezifische Oberfläche auf, durch die hindurch vergleichsweise viel Treibmittel eindringen kann.

Das erfindungsgemäße Verfahren eignet sich besonders für die Herstellung von verlorenen Modellen für den Serienguß, wobei gemäß Anspruch 6 an der Vorschäumeinrichtung lediglich ein Anschluß für die Absaugung der Dampf-Luftatmosphäre unter Erzeugung eines Vakuumstoßes sowie ein Anschluß für einen gasförmigen Treibmittelvorrat vorgesehen sein muß. Die erfindungsgemäß vorgesehene Erzeugung der Nachschäumfähigkeit der mit hohem Vorschäumgrad expandierten Perlen erfordert im unmittelbaren Anschluß an die Vorschäumung lediglich einen Zeitbedarf von ganz wenigen Minuten, in denen zunächst der Vakuumstoß erzeugt und sodann das gasförmige Treibmittel zugeführt wird; nach geringer Verweilzeit können die expandierten Perlen in einen zweckmäßig erwärmten Behälter abgezogen und der Formschäummaschine zugeführt werden. Im Falle einer im Einzelfalle erforderlichen Zwischenlagerung kann diese ohne wesentlichen Treibmittelverlust in einer Treibmittelatmosphäre erfolgen, wie dies an sich bekannt ist.

Auf diese Weise wird erfindungsgemäß für den nachfolgenden Nachschäumvorgang in der Schäumform ein vorgeschäumtes Material besonders feinperliger Qualität zur Verfügung gestellt, das dennoch ausreichenden Treibmittelgehalt für die Nachschäumung besitzt. Somit können auch dünne Querschnitte der Schäumform sauber gefüllt werden und sichert die Nachschäumung eine glatte Oberfläche des Modells und damit des mit dem verlorenen Modell erzeugten Gußstückes. Besonders vorteilhaft erfolgt die Nachschäumung gemäß dem Verfahren der europäischen Patentanmeldung derselben Anmelderin mit demselben Titel wie die vorliegende Anmeldung vom heutigen Tage unter Inanspruchnahme der Unionspriorität der deutschen Patentanmeldung P 33 47 616, wodurch sich eine weitere Verbesserung der Oberflächenqualität erzielen läßt.

## Patentansprüche

1. Verfahren zur Herstellung von aus expandierten Schaumstoffperlen bestehenden, verlorenen Gießmodellen für das Vollformgießverfahren, vorzugsweise zur Fertigung von Seriengußteilen, bei dem ein feinperliges treibmittelhaltiges ungeschäumtes Vorprodukt, insbesondere Polystyrol, vorgeschäumt und im Falle einer Einbringung der hierzu erforderlichen Energie durch Dampf anschließend getrocknet wird, und bei dem die vorgeschäumten Schaumstoffperlen in eine vorzugsweise der Kontur des herzustellenden Gußstückes entsprechende Schäumform eingeführt und dort durch Einleitung eines Wärmeträgermediums erwärmt und nachgeschäumt werden, dadurch gekennzeichnet, daß die Vorschäumung mit so hohem Vorschäumgrad, insbesondere unter Verbrauch des gesamten nutzbaren Treibmittels, durchgeführt wird, daß für die Nachschäumung in der Schäumform kein ausreichender Treibmittelgehalt mehr verbleibt, und daß sogleich nach Abschluß der Vorschäumung die das vorgeschäumte Material umgebende Atmosphäre abgesaugt und zusätzliches Treibmittel zur Bildung einer Treibmittelatmosphäre zugeführt wird.

2. Verfahren nach Anspruch 1, dadurch gekennzeichnet, daß das Treibmittel den expandierten Perlen unter leichtem Überdruck zugeführt wird.

3. Verfahren nach Anspruch 1 oder 2, dadurch gekennzeichnet, daß die expandierten Perlen noch über eine Verweildauer von etwa 1 min bis etwa 5 min in der Treibmittelatmosphäre belassen werden.

4. Verfahren nach einem der Ansprüche 1 bis 3, dadurch gekennzeichnet, daß der sich bei der Absaugung einstellende Unterdruck je nach verwendetem Vorprodukt um etwa 300 mbar bis 800 mbar unter dem atmosphärischen Luftdruck gewählt wird.

5. Verfahren nach Anspruch 4, dadurch gekennzeichnet, daß der Unterdruck über eine Zeitdauer zwischen 0,5 s und 2 s aufrechterhalten wird.

6. Vorrichtung zur Durchführung des Verfahrens nach einem der Ansprüche 1 bis 5, mit einem Vorschäumraum mit einem Anschluß für Dampf, dadurch gekennzeichnet, daß ein Anschluß für die Absaugung des Dampf-Luftgemisches und ein Anschluß zur Zuführung eines gasförmigen Treibmittelvorrats vorgesehen sind.

## Claims

1. Process for making lost casting models, consisting of expanded foam beads, for the full-mould casting process, especially for the mass production of castings, wherein fine beads of an unfoamed intermediate containing blowing agent, especially polystyrene, are prefoamed and, in the case of the energy required for this purpose being introduced by steam, are then dried, and wherein the prefoamed foam beads are introduced into a foaming mould, which preferably corresponds to the contours of the casting to be made, and are heated and finally foamed therein by introducing a heat transfer medium, characterized in that the prefoaming is carried out at such a high degree of prefoaming, especially with consumption of all the available blowing agent, that the blowing agent content remaining in the foaming mould is no longer sufficient for final foaming, and in that, immediately after prefoaming has been completed, the atmosphere surrounding the prefoamed material is extracted and additional blowing agent for forming a blowing agent atmosphere is fed in.

2. Process according to Claim 1, characterized in that the blowing agent is fed under a slight positive pressure to the expanded beads.

3. Process according to Claim 1 or 2, characterized in that the expanded beads are left in the blowing agent atmosphere for a further residence time of about 1 minute to about 5 minutes.

4. Process according to one of Claims 1 to 3, characterized in that the reduced pressure which is established during the extraction is, depending on the intermediate used, selected to be about 300 mbar to 800 mbar below atmospheric pressure.

5. Process according to Claim 4, characterized in that the reduced pressure is maintained for a period of between 0.5 seconds and 2 seconds.

6. Device for carrying out the process according to one of Claims 1 to 5, having a prefoaming chamber with a steam connection, characterized in that a connection for extracting the steam/air mixture and a connection for feeding a gaseous blowing agent supply are provided.

**Revendications**

1. Procédé de fabrication de modèles perdus, constitués de perles de matériau mousse expansé pour le moulage sur modèle consommable ou en moule plein, de préférence pour la fabrication de pièces moulées en série, dans lequel on soumet à une première expansion une matière première, en particulier du polystyrène de faible granulométrie, non expansée et contenant du produit porophore, et on le sèche ensuite dans le cas où l'énergie nécessaire a été amenée sous forme de vapeur, et dans lequel on introduit les perles, qui ont subi une première expansion, dans un moule qui correspond de préférence au contour de la pièce de fonderie à fabriquer et on les y chauffe par envoi d'un fluide caloporteur et on les soumet à une seconde expansion, caractérisé en ce que la première expansion s'exécute avec un taux d'expansion élevé, en particulier en consommant la totalité du produit porophore utilisable, tel que pour la seconde expansion il ne reste plus dans le moule une quantité suffisante de produit porophore ; et en ce qu'aussitôt après la fin de la première expansion on aspire l'atmosphère qui entoure le matériau ayant subi la première expansion et on y envoie du produit porophore supplémentaire pour créer une atmosphère porophore.

2. Procédé selon la revendication 1, caractérisé en ce que le produit porophore est envoye dans les perles expansées sous légère surpression.

3. Procédé selon la revendication 1 ou 2, caractérisé en ce qu'on laisse encore les perles expansées dans l'atmosphère porophore pendant une durée de séjour d'environ 1 minute à environ 5 minutes.

4. Procédé selon l'une des revendications 1 à 3, caractérisé en ce que, selon chaque fois la matière première employée, on choisit la dépression à obtenir lors de l'aspiration entre environ 300 mbar et 800 mbar.

5. Procédé selon l'une des revendications 1 à 3, caractérisé en ce que l'on maintient la dépression pendant une durée allant entre 0,5 s et 2 s.

6. Dispositif pour exécuter le procédé selon une des revendications 1 à 5, comportant un espace pour la première expansion avec un raccord pour la vapeur, caractérisé en ce qu'il est prévu un raccord pour aspirer le mélange vapeur-air et un raccord pour introduire une réserve de produit porophore sous forme gazeuse.